# EUROPEAN PATENT SPECIFICATION

(11) **EP 0 583 919 B1**
(45) Date of publication and mention of the grant of the patent: **15.11.1995**
(21) Application number: 93306167.3
(22) Date of filing: 04.08.1993
(51) Int. Cl.: C09C 1/64, C09C 3/06, C09D 17/00, C09D 7/12

(54) **Flaky aluminium pigments coated with molybdic acid**
Schuppenförmige mit Molybdänsäure beschichtete Aluminiumpigmente
Pigments d'aluminium en paillettes revêtues d'acide molybdique

(30) Priority: 05.08.1992 JP 209079/92
(43) Date of publication of application: 23.02.1994
(73) Proprietor: TOYO ALUMINIUM KABUSHIKI KAISHA, Osaka-shi Osaka-fu (JP)
(72) Inventor: Setoguchi, Shunichi, Kashihara-shi, Nara-ken (JP); Katoh, Haruzo, Akashi-shi, Hyogo-ken (JP); Matsufuji, Takashi, Yamato-Koriyama-shi, Nara-ken (JP)
(74) Representative: Woods, Geoffrey Corlett

(56) References cited:
- US-A- 3 969 127
- DATABASE WPI Section Ch, Week 9252, Derwent Publications Ltd., London, GB; Class G01, AN 92-426415 & JP-A-4 318 181 (NIPPON PAINT CO.) 9 November 1992
- DATABASE WPI Section Ch, Week 8513, Derwent Publications Ltd., London, GB; Class G01, AN 85-077465 & JP-A-60 029 401 (PENTEL K. K.) 14 February 1985

## Description

The present invention relates to aluminium flakes and aluminium pigments which are incorporated into water base paints, which may be used for finish coating car bodies, and water base inks.

Aluminium pigments to be incorporated in water base paints are described in many prior publications. However, processes for obtaining the aluminium pigments which can be incorporated in the water base paints used for finish coating car bodies are described only in JP-B-01/54386, JP-A-59/74201 and JP-B-60/8057.

JP-B-01/54386 relates to a treatment with chromic acid. By this treatment, an aluminium pigment which has a good stability in the water base paint, which can inhibit the production of hydrogen gas and which has excellent color tone can be obtained. When the aluminium pigment comprises fine aluminium flakes, however, this treatment causes dissolution of the fine aluminium flakes. Thus, an aluminium pigment comprising fine aluminium flakes having an average particle size (D₅₀) of less than 20 µm is hardly ever obtained. Furthermore, this treatment causes industrial hygienic and environmental problems due to the use of Cr(VI) and, therefore, its application is limited.

JP-A-59/74201 relates to a treatment with ammonium vanadate. By this treatment, gas production is inhibited. However, this treatment causes an increase in thickness of the coating and a lowering in color tone and, therefore, its application is also limited.

JP-B-60/8057 relates to a treatment with a lauryl ester of phosphoric acid. By this treatment, an aluminium pigment with inhibited gas production and good color tone can be obtained. This treatment however causes an important defect to the properties of the coating due to the presence of lauryl groups on the surface of the coating. The coating has poor adhesion to a metallic base coating film and a top coating film, when the water base paint containing the resultant aluminium pigment is used for finish coating a car body according to a standard coating method such as the 2C1B coating method and 2C2B coating method.

As described above, there is no prior art which can provide an aluminium pigment suitable for incorporation in the water base paint used for finish coating a car body, which has excellent color tone, stability in the water base paint and coating property.

The present invention seeks to provide an aluminium pigment suitable for incorporation in a water base paint used for finish coating a car body, which has excellent color tone, stability in the water base paint and coating property.

Accordingly, the present invention provides aluminium flakes coated with molybdic acid in an amount of 0.1 to 10 % by weight in terms of Mo based on aluminium.

The present invention also provides an aluminium pigment comprising aluminium flakes as defined above and a water-soluble solvent.

The present invention additionally provides a method for preparing aluminium flakes as defined above comprising reacting aluminium flakes with ammonium molybdate in an alkaline aqueous solution.

The present invention further provides a water base metallic paint or coating film comprising aluminium flakes as defined above or an aluminium pigment as defined above.

Suitable aluminium flakes used as the starting material have excellent color tone, that is, the aluminium flakes have a rich metallic luster, and have an average particle diameter (D₅₀) of 1 to 50 µm, preferably 10 to 30 µm. These aluminium flakes are produced by grinding or milling using a grinding agent in the presence of a grinding medium in a suitable device such as a ball mill or an attritor mill. As the grinding agent, a higher fatty acid such as oleic acid, stearic acid, isostearic acid, lauric acid, palmitic acid and myristic acid; aliphatic amines; aliphatic amides; and aliphatic alcohols are generally used.

Desirably, the aluminium flakes to be treated are previously dispersed in a water-soluble solvent as mentioned below so that they are easily wettened with the alkaline aqueous solution containing ammonium molybdate as a treating solution. If the grinding medium is incompatible with the treating solution, the grinding medium should be replaced with the water-soluble solvent prior to the treatment.

Usable ammonium molybdate is ortho-, meta- or para-molybdate. Alkali metal molybdate which is also water-soluble is not preferred for the treatment of the aluminium flakes, because of its high alkaline strength. Any alkali metal remaining in the coating may affect the coating properties. In the preparation of the treating solution, ammonium molybdate is preferably dissolved in a mixture of water and the water-soluble solvent so that it is contained in a concentration of a few percent or less. The water-soluble solvent is essential for effecting the contact of the aluminium flakes and ammonium molybdate.

Usable water-soluble solvents include ethylene glycol monobutyl ether (butyl cellosolve), diethylene glycol monobutyl ether, propylene glycol monomethyl ether, propylene glycol monopropyl ether and isopropyl alcohol.

The treating solution is alkaline. In general, the pH of the treating solution is 7 to 10, preferably 7.5 to 9.5, more preferably 8 to 9 and most preferably 8.3 to 8.9. When the pH is less than 7, the reaction of the aluminium with the molybdate proceeds very slowly, perhaps due to the presence of the grinding agent such as the fatty acid adsorbed on the surfaces of the aluminium flakes. Of course, when the treating solution has an acidic pH which is out of the passive zone, dissolution of the aluminium occurs. On the other hand, when the pH of the treating solution is above 10, a rapid reaction occurs and, as a result, an aluminium pigment having excellent color tone cannot be obtained.

The reaction is completed by removing the water and unreacted reactants from the reaction system. After the reaction has been completed, the reaction product is washed and filtered. If necessary, the resultant residue is dispersed in a water-soluble solvent for stable storage.

The amount of the resultant coating of molybdic acid is 0.1 to 10 % by weight in terms of Mo based on aluminium. When it is less than the lower limit, inhibition of gas production is insufficient. On the other hand, when it is above the upper limit, the coating is too thick and, as a result, the color tone is impaired. The preferred amount is 0.1 to 3 % by weight.

As shown in the following Examples, aluminium flakes having the desired properties can be obtained by treating the aluminium flakes with an alkaline aqueous solution containing ammonium molybdate (hereinafter referred to as the "first treatment"). By subjecting the aluminium flakes prepared in the first treatment to a second treatment as mentioned below, an aluminium pigment having the desired properties can be obtained with more certainty.

The second treatment comprises mixing and kneading the first-treated aluminium flakes with a second treating agent which is at least one of a water-insoluble metal salt of molybdic acid and vanadium pentoxide so that 0.1 to 10 % by weight of the treating agent in terms of metal based on aluminium is attached to the above coating of molybdic acid. When the first-treated aluminium pigment contains water, the water is preferably replaced with the water-soluble solvent before the first-treated aluminium pigment is subjected to the second treatment.

Usable water-insoluble metal salts of molybdic acid as the second treating agent include a basic zinc salt, magnesium salt, calcium salt, strontium salt and barium salt. The second treating agent is a powder, generally having an average particle size of 1 to 10 µm. It is used after dispersing in a small amount of the water-soluble solvent.

The powdery second treating agent together with the first-treated aluminium flakes are dispersed in the water-soluble solvent followed by mixing and kneading. In this way the powder of the second treating agent is attached to the coating of the molybdic acid formed in the first treatment. The amount of the powdery second treating agent attached to the coating of molybdic acid by the second treatment is in the range of 0.1 to 10 % by weight in terms of metal based on aluminium. When it is less than the lower limit, the advantage of the second treatment cannot be obtained. On the other hand, when it is above the upper limit, the amount of the powdery second treating agent attached is too much and, as a result, the color tone is impaired. A preferred amount is 1 to 8 % by weight.

Usually, the powdery second treating agent used is not completely attached to the coating of molybdic acid. Because the second treating agent itself is stable in the water base paint and does not affect the coating properties, powdery second treating agent in an unattached condition may be present during the preparation of the water base paint.

For increasing the attached amount of the powdery second treating agent on the coating of molybdic acid, it is preferred to contact the first-treated aluminium flakes with an aqueous solution of ammonium phosphate or an alcoholic solution of a lower alkyl ester of orthophosphoric acid after forming the coatings of molybdic acid, for example during the washing of the first-treated aluminium flakes. It is assumed that by such a contact phosphate (-P-OH) groups are adsorbed on the coatings of molybdic acid, thereby increasing the adhesion of the powdery second treating agent to the coatings of molybdic acid. Alternatively, the surface of the second treating agent may be modified with the phosphate (-P-OH) groups prior to use.

The second-treated aluminium flakes have a structure such that a coating of molybdic acid in an amount of 0.1 to 10 % by weight in terms of Mo based on aluminium is formed on the aluminium flakes and furthermore at least one powdery second treating agent selected from the water-insoluble metal salts of molybdic acid and vanadium pentoxide in the amount of 0.1 to 10 % by weight in terms of metal based on aluminium is attached to the coating of molybdic acid.

The aluminium pigment of the present invention may be incorporated in any water base paint. The water base resin constituting the water base paint is classified into a water soluble resin, a water dispersible resin and an emulsifiable resin. The nature of the water base resin includes a combination of acrylic and melamine resins, a combination of polyester and melamine resins, urethane resin and CAB resin. The type and the nature of the water base resin to which the aluminium pigment of the present invention is applied is not limited. Of course, the water base paint in which the aluminium pigment of the present invention is incorporated may be coated by any coating method. Known coating methods such as an air spray coating, an airless spray coating and a roller coating can be used.

According to the present invention, by treating the aluminium flakes with the alkaline aqueous solution containing ammonium molybdate in the first treatment, coatings of molybdic acid which have excellent water resistance can be formed on the aluminium flakes without lowering the intrinsic color tone of the aluminium pigment due to the slow reaction with the alkaline aqueous solution containing ammonium molybdate. By subjecting the first-treated aluminium pigment to the second treatment using the powdery second treating agent selected from the water-insoluble metal salts of molybdic acid and vanadium pentoxide, powders of the second treating agent are attached to the coatings of molybdic acid, further improving the water resistance of the aluminium pigment.

The water base paint in which the second-treated aluminium pigment is incorporated has very excellent storage stability, as compared with the prior water base paints. As clear from the following Examples, the treatment according to the present invention does not deteriorate the coating properties and, therefore, the aluminium pigment of the present invention is suitable for incorporating in the water base paint used for finish coating car bodies. The aluminium pigment of the present invention can be incorporated in oil paints without any inconvenience.

The aluminium pigment of the present invention which is mainly coated with molybdic acid can be used without environmental problems.

### Examples

The following Examples more fully illustrate the present invention.

### Examples 1 and 2

Aluminium flakes (Alpaste (trade name) 7670NS, D₅₀= 15 µm, produced by Toyo Aluminium K.K.) were weighed so that 200 g in terms of Al were present and placed in a beaker (3 litres), to which 1 l of propylene glycol monomethyl ether was added, followed by stirring at 400 r.p.m., to prepare a dispersion of aluminium flakes. The whole was cooled to 18°C. Independently, a predetermined amount of ammonium paramolybdate (NH₄)₆Mo₇O₂₄.4H₂O was dissolved in 200 ml of demineralized water, to prepare the treating solution.

To the dispersion of aluminium flakes, the treating solution was added dropwise, and they were reacted for 1 hour at a predetermined pH at a liquid temperature of 15 to 20°C while stirring at 400 to 450 r.p.m. The amount of ammonium paramolybdate and pH in the treatment are shown in Table 1.

The reaction product was decanted with demineralized water three times so as to remove NH₄ ions and unreacted ammonium paramolybdate and filtered through a glass filter with suction. Then, the aluminium flakes on the filter were washed with propylene glycol monomethyl ether three times to completely remove the water and finally filtered with suction. A first-treated aluminium pigment was thus obtained.

### Examples 3 to 10 and Comparative Example 1 to 3

After redispersing the first-treated aluminium pigment (200 g in terms of Al) obtained in each of the above Examples in 108 g of propylene glycol monomethyl ether, the resultant dispersion was transferred into a kneader, to which a predetermined amount of a second treating agent previously dispersed in a small amount of propylene glycol monomethyl ether was added, and then mixed and kneaded for 30 minutes. The second treating agents used are shown in Table 1.

In Comparative Example 1, a commercially available aluminium pigment treated with chromic acid (STAPA HYDROLUX (trade name) 400, D₅₀= 23 µm, produced by Eckart-Werke AG) was used.

In Comparative Example 2, the aluminium flakes (Alpaste (trade name) 7670NS) used in Example 1 were used after replacing the water with isopropyl alcohol.

In Comparative Example 3, the aluminium flakes treated in the same manner as Example 1, except that 1 l of propylene glycol monomethyl ether was replaced with 1 l of propylene glycol monopropyl ether containing acetic acid (conc. 190 ppm) so that the reaction of aluminium with molybdate was conducted at pH 5.8, were used.

**Table 1**

| | first treatment | | second treatment | |
|---|---|---|---|---|
| | ammonium p-molybdate (wt %) | pH | treating agent | amount (wt %) |
| Ex. 1 | 2.5 | 8.3 | - | - |
| Ex. 2 | 5.0 | 8.9 | - | - |
| Ex. 3 | 2.5 | 8.3 | Mo-Ca* | 5.0 |
| Ex. 4 | 5.0 | 8.9 | Mo-Ca* | 5.0 |
| Ex. 5 | 2.5 | 8.3 | Mo-Zn* | 5.0 |
| Ex. 6 | 5.0 | 8.9 | Mo-Zn* | 5.0 |
| Ex. 7 | 2.5 | 8.3 | LF MC400WR** | 5.0 |
| Ex. 8 | 2.5 | 8.3 | Mo-Ba* | 5.0 |
| Ex. 9 | 2.5 | 8.3 | Mo-Ba* | 5.0 |
| Ex. 10 | 2.5 | 8.3 | V₂O₅ | 5.0 |
| Comp. Ex. 1 | - | - | - | - |
| Comp. Ex. 2 | - | - | - | - |
| Comp. Ex. 3 | 2.5 | 5.8 | - | - |

| | | | | |
|---|---|---|---|---|
| * Mo-Ca, Mo-Zn, Mo-Ba and Mo-Sr are the calcium salt, zinc salt, barium salt and strontium salt of molybdic acid, respectively. | | | | |
| ** trade name (Zn-Ca salt of molybdic acid, ex. Kikuchi Color and Chemicals Corporation) | | | | |

### Test

The stabilities of the aluminium pigment obtained in each of Examples 1 to 10 and Comparative Examples 1 to 3 in the water base metallic paint and the finish coating prepared from the same paint and the top clear paint were tested.

| Formulation of water base metallic paint for base coating film: | |
|---|---|
| water soluble acrylic resin (Almatex (trade name) WA 911, produced by MITSUI TOATSU CHEMICALS INC.) | 28.16 g |
| triethylamine | 1.14 g |
| demineralized water | 44.8 g |
| melamine resin (Cymel 350, produced by MITSUI CYANAMID) | 4.4 g |
| isopropyl alcohol | 3.0 g |
| transparent iron oxide (SICOTRANS (trade name) RED L1275D, produced by BASF) | 5.0 g |
| aluminium pigment (as Al) | 3.0 g |

| Formulation of oily clear paint for top coating film: | |
|---|---|
| acrylic resin (Almatex (trade name) 110, produced by MITSUI TOATSU CHEMICALS INC.) | 140.0 g |
| melamine resin (Uban (trade name) 20SE60, produced by MITSUI TOATSU CHEMICALS INC.) | 50.0 g |
| Solvesso 100 | 60.0 g |

### Coating method:

A steel plate previously electrodeposited with a primer was coated with the above paints in order using a SA-71 spray gun (IWATA TOSOKI KOGYO K.K.) and an automatic air coating device Model 310741 (SPRAYMATION INC.) according to the 2C1B coating method to prepare a test piece. That is, the steel plate was coated with the water base metallic paint for a base coating film so that the dried film was 13 µm thick and then dried in an air oven at 90°C for 10 minutes. Next, the oily clear paint for a top coating film was coated so that the dried film was 40 µm thick, followed by baking to cure in the air oven at 140°C for 30 minutes.

### Stability in the water base paint

80 grams of the water base metallic paint was introduced into a flask, which was set in a water bath whose temperature was controlled to 50°C. The cumulative volume of hydrogen gas produced in 7 days was determined. In Comparative Examples 2 and 3, the cumulative volume of hydrogen gas produced in 1 day was determined.

The lower the cumulative volume of hydrogen gas, the higher the stability of the pigment in the paint.

### Coating properties

For testing the accelerated humidity resistance, the resultant finished film test piece was stored at a temperature of 50°C and a humidity of 98 % or more for 10 days. The changes in the color tone and the adhesion of the metallic film to the top clear film before and after the storage of the test piece were determined.

The color tone (metallic luster IV value) of the metallic film was determined using a color measurement machine (ALCOPE (trade name) Model LMR-100, KANSAI PAINT CO., Ltd.). A desired metallic film stably shows an IV value of higher than that in Comparative Example 2. The adhesion was determined in accordance with ASTM D3359 B (6 ranks). 3B or more is considered to be acceptable. The results are shown in Table 2.

**Table 2**

| | stability | coating properties | | | |
|---|---|---|---|---|---|
| | gas volume (ml) | before | | after | |
| | | IV | adhesion | IV | adhesion |
| Ex. 1 | 3.0 | 202 | 5B | 205 | 4B |
| Ex. 2 | 2.0 | 195 | 5B | 196 | 4B |
| Ex. 3 | 0.5 | 197 | 5B | 198 | 5B |
| Ex. 4 | 0.0 | 185 | 5B | 185 | 5B |
| Ex. 5 | 0.5 | 195 | 5B | 195 | 5B |
| Ex. 6 | 0.0 | 187 | 5B | 186 | 5B |
| Ex. 7 | 0.5 | 198 | 5B | 199 | 5B |
| Ex. 8 | 0.5 | 198 | 5B | 198 | 4B |
| Ex. 9 | 0.5 | 190 | 5B | 192 | 4B |
| Ex. 10 | 0.5 | 195 | 5B | 195 | 4B |
| Comp. Ex. 1 | 1.0 | 193 | 4B | 195 | 3B |
| Comp. Ex. 2 | >20 | 305 | 5B | 282 | 5B |
| Comp. Ex. 3 | >20 | 197 | 5B | 173 | 4B |

As shown in the above Table, the aluminium pigments of Examples 1 and 2 prepared by only the first treatment showed very good color tone which was maintained after the accelerated humidity resistance test. The aluminium pigments of Examples 3 to 10 prepared by subjecting the aluminium pigments of Examples 1 and 2 to the second treatment showed good color tone which was maintained after the accelerated humidity resistance test. In addition, in the aluminium pigments of Examples 3 to 10, the volume of hydrogen gas produced is negligible. On the other hand, the aluminium pigment of Comparative Example 2, which was subjected to no treatment, produced a large volume of hydrogen gas and, as a result, its stability in the water base paint is very poor. The aluminium pigment of Comparative Example 1, which is the commercially available aluminium pigment treated with chromic acid, produced a minor volume of hydrogen gas and showed good color tone, but the adhesion between the base coating film with the top coating film was slightly inferior. It had a lowered adhesion after the accelerated humidity resistance test. The lowering in adhesion is assumed to be due to the presence of a slight amount of residual chromic (VI) acid. The aluminium pigment of Comparative Example 3, which was obtained by a reaction under acidic conditions, produced a large volume of hydrogen gas, because it had an insufficient coating of molybdic acid.

### Quantitative determination of metal content (wt%)

The aluminium pigment was washed with acetone followed by powdering. After drying at 250°C for 15 minutes, the resultant powder was quantitatively determined by ICP analysis. The results are shown in Table 3.

**Table 3**

| | Al | Mo | Ca | Zn | Ba |
|---|---|---|---|---|---|
| Ex. 1 | 98.932 | 0.632 | 0.000 | 0.000 | 0.000 |
| Ex. 4 | 96.433 | 1.702 | 1.333 | 0.000 | 0.000 |
| Ex. 5 | 97.027 | 1.712 | 0.000 | 1.071 | 0.000 |
| Ex. 7 | 96.734 | 0.814 | 1.625 | 0.421 | 0.000 |
| Ex. 8 | 97.006 | 1.297 | 0.000 | 0.000 | 1.516 |
| Comp.Ex. 2 | 99.765 | 0.000 | 0.000 | 0.000 | 0.000 |
| Comp.Ex. 3 | 99.748 | 0.056 | 0.000 | 0.000 | 0.000 |

The content of Al was calculated by subtracting the total amount of metals other than Al, such as Mo, Zn, Ca, Ba, V, Fe, Si, Cu and Ti from 100.

## Claims

1. Aluminium flakes coated with molybdic acid in an amount of 0.1 to 10% by weight in terms of Mo based on Al.

2. Aluminium flakes according to claim 1 wherein at least one of a water-insoluble metal salt of molybdic acid and vanadium pentoxide is attached to the molybdic acid coating in an amount of 0.1 to 10% by weight in terms of metal based on Al.

3. An aluminium pigment comprising aluminium flakes as defined in claim 1 or 2 and a water-soluble solvent.

4. A pigment according to claim 3 which is in the form of a paste and wherein the water-soluble solvent is propylene glycol monomethyl ether.

5. A method for preparing aluminium flakes as defined in claim 1 comprising reacting aluminium flakes with ammonium molybdate in an alkaline aqueous solution.

6. A method according to claim 5 wherein the aluminium flakes to be reacted are dispersed in at least one water-soluble solvent selected from ethylene glycol monobutyl ether, diethylene glycol monobutyl ether, propylene glycol monomethyl ether, propylene glycol monopropyl ether and isopropyl alcohol.

7. A method according to claim 5 or 6 wherein the alkaline aqueous solution containing ammonium molybdate is added to the aluminium flakes or a dispersion thereof.

8. A method according to any one of claims 5 to 7 wherein the ammonium molybdate is ammonium paramolybdate.

9. A method according to any one of claims 5 to 8 wherein the reaction is conducted at a pH of 8 to 9.

10. A method according to claim 9 wherein the reaction is conducted at a pH of 8.3 to 8,9.

11. A method according to any one of claims 5 to 10 which further comprises mixing and kneading the coated aluminium flakes with at least one of a water-soluble metal salt of molybdic acid and vanadium pentoxide to form aluminium flakes as defined in claim 2.

12. A water base metallic paint or metallic coating film comprising aluminium flakes as defined in claim 1 or 2 or an aluminium pigment as defined in claim 3 or 4.

## Patentansprüche

1. Aluminiumblättchen, die mit Molybdänsäure in einer Menge von 0,1 bis 10 Gew.-%, ausgedrückt als Mo, bezogen auf Al, überzogen sind.

2. Aluminiumblättchen nach Anspruch 1, worin mindestens eines von einem wasserunlöslichen Metallsalz von Molybdänsäure und Vanadiumpentoxid an dem Molybdänsäureüberzug in einer Menge von 0,1 bis 10 Gew.-%, ausgedrückt als Metall, bezogen auf Al, angelagert ist.

3. Aluminiumpigment, umfassend Aluminiumblättchen nach Anspruch 1 oder 2 und ein wasserlösliches Lösungsmittel.

4. Pigment nach Anspruch 3, welches in Form einer Paste vorliegt und worin das wasserlösliche Lösungsmittel Propylenglycolmonomethylether ist.

5. Verfahren zum Herstellen von Aluminiumblättchen, wie in Anspruch 1 definiert, umfassend das Umsetzen von Aluminiumblättchen mit Ammoniummolybdat in einer alkalischen, wäßrigen Lösung.

6. Verfahren nach Anspruch 5, worin die Aluminiumblättchen, die umgesetzt werden sollen, in mindestens einem wasserlöslichen Lösungsmittel, ausgewählt aus Ethylenglycolmonobutylether, Diethylenglycolmonobutylether, Propylenglycolmonomethylether, Propylenglycolmonopropylether und Isopropylalkohol, dispergiert sind.

7. Verfahren nach Anspruch 5 oder 6, worin die alkalische, wäßrige Lösung, die Ammoniummolybdat enthält, zu den Aluminiumblättchen oder einer Dispersion davon zugegeben wird.

8. Verfahren nach einem der Ansprüche 5 bis 7, worin das Ammoniummolybdat Ammoniumparamolybdat ist.

9. Verfahren nach einem der Ansprüche 5 bis 8, worin die Reaktion bei einem pH von 8 bis 9 durchgeführt wird.

10. Verfahren nach Anspruch 9, worin die Reaktion bei einem pH von 8,3 bis 8,9 durchgeführt wird.

11. Verfahren nach einem der Ansprüche 5 bis 10, welches ferner das Vermischen und Kneten der überzogenen Aluminiumblättchen mit mindestens einem von einem wasserlöslichen Metallsalz von Molybdänsäure und Vanadiumpentoxid umfaßt, um Aluminiumblättchen, wie in Anspruch 2 definiert, zu bilden.

12. Metallpigmentfarbe auf Wasserbasis oder Metallpigmentüberzugsfilm, umfassend Aluminiumblättchen, wie in Anspruch 1 oder 2 definiert, oder ein Aluminiumpigment, wie in Anspruch 3 oder 4 definiert.

## Revendications

1. Paillettes d'aluminium revêtues d'acide molybdique en une quantité de 0,1 à 10% en poids en termes de Mo par rapport à Al.

2. Paillettes d'aluminium suivant la revendication 1, dans lesquelles au moins un composé parmi un sel métallique insoluble dans l'eau d'acide molybdique et le pentoxyde de vanadium est fixé au revêtement d'acide molybdique en une quantité de 0,1 à 10% en poids en terme de métal par rapport à Al.

3. Pigment d'aluminium comprenant des paillettes d'aluminium suivant les revendications 1 ou 2 et un solvant soluble dans l'eau.

4. Pigment suivant la revendication 3, qui est sous la forme d'une pâte et dans lequel le solvant soluble dans l'eau est l'éther monométhylique de propylène glycol.

5. Procédé pour préparer des paillettes d'aluminium suivant la revendication 1, comprenant la réaction des paillettes d'aluminium avec du molybdate d'ammonium dans une solution aqueuse alcaline.

6. Procédé suivant la revendication 5, dans lequel les paillettes d'aluminium à traiter sont dispersées dans au moins un solvant soluble dans l'eau choisi parmi l'éther monobutylique d'éthylène glycol, l'éther monobutylique de diéthylène glycol, l'éther monométhylique de propylène glycol, l'éther monopropylique de propylène glycol et l'alcool isopropylique.

7. Procédé suivant les revendications 5 ou 6, dans lequel la solution aqueuse alcaline contenant du molybdate d'ammonium est ajoutée aux paillettes d'aluminium ou à une dispersion de celles-ci.

8. Procédé suivant l'une quelconque des revendications 5 à 7, dans lequel le molybdate d'ammonium est du paramolybdate d'ammonium.

9. Procédé suivant l'une quelconque des revendications 5 à 8, dans lequel la réaction est conduite à un pH de 8 à 9.

10. Procédé suivant la revendication 9, dans lequel la réaction est conduite à un pH de 8,3 à 8,9.

11. Procédé suivant l'une quelconque des revendications 5 à 10, qui comprend de plus le mélange et le malaxage des paillettes d'aluminium revêtues avec au moins un composé parmi un sel métallique soluble dans l'eau d'acide molybdique et le pentoxyde de vanadium pour former des paillettes d'aluminium telles que définies dans la revendication 2.

12. Peinture métallique à base aqueuse ou film de revêtement métallique comprenant des paillettes d'aluminium telles que définies dans les revendications 1 ou 2 ou un pigment d'aluminium tel que défini dans les revendications 3 ou 4.
